# EUROPEAN PATENT SPECIFICATION

(11) **EP 1 481 999 B1**
(45) Date of publication and mention of the grant of the patent: **24.06.2009**
(21) Application number: 04009823.8
(22) Date of filing: 26.04.2004
(51) Int. Cl.: C08G 59/28, C08G 59/32

(54) **Thermally-conductive epoxy resin molded article and method of producing the same**
Geformter Gegenstand aus wärmeleitendem Epoxidharz und Verfahren zu seiner Herstellung
Article moulé de résine époxide thermoconductrice et procédé pour sa préparation

(30) Priority: 07.05.2003 JP 2003129400
(43) Date of publication of application: 01.12.2004
(73) Proprietor: POLYMATECH CO., LTD., Tokyo 103-8424 (JP)
(72) Inventor: Tobita, Masayuki, Kita-ku, Tokyo 114-0014 (JP); Kimura, Toru, Kita-ku, Tokyo 114-0014 (JP); Ishigaki, Tsukasa, Kita-ku, Tokyo 114-0014 (JP); Shimoyama, Naoyuki, Kita-ku, Tokyo 114-0014 (JP); Aoki, Hisashi, Kita-ku, Tokyo 114-0014 (JP); Ochi, Mitsukazu, Ibaraki-shi, Osaka 567-0046 (JP); Harada, Miyuki, Osaka-shi, Osaka 538-0052 (JP)
(74) Representative: Hüttermann, Aloys

(56) References cited:
- US-A- 5 486 580
- US-B1- 6 294 593

## Description

The present invention relates to a method of producing a thermally-conductive epoxy resin molded article for conducting heat generated by electronic components or the like.

In recent years, the integration degree and speed in LSIs and the mounting density in semiconductor packages have been increased, in accordance with a trend toward high performance, downsizing, and reduction in weight of electronic equipments. Accordingly, the heat generated by various electronic parts has increased, and measures for dissipating heat out of the electronic parts has become a very important task. For achieving this task, a thermally-conductive molded article comprised of a heat-radiating material, such as a metal, ceramic, or a polymer composition, is used in heat-radiating members, such as print wiring boards, semiconductor packages, housings, pipes, heat radiating panels, and heat diffusion panels.

Among the above molded articles, thermally-conductive epoxy resin molded articles formed from epoxy resin compositions are excellent in electrical insulation properties, mechanical properties, heat resistance, chemical resistance, adhesive properties, and so forth. Therefore, they are widely used as cast articles, laminated plates, sealing materials, and adhesives, mainly in the electric and electronic fields.

Known as epoxy resin compositions constituting such thermally-conductive epoxy resin molded articles are those formed by mixing a thermally-conductive filler having a high thermal conductivity in a polymer matrix material, such as a resin and rubber. As the thermally-conductive fillers, there are conventionally used metal oxides, such as aluminum oxide, magnesium oxide, zinc oxide, and quartz, metal nitrides, such as boron nitride and aluminum nitride, metal carbides, such as silicon carbide, metal hydroxides, such as aluminum hydroxide, metals, such as gold, silver, and copper, carbon fibers, graphite, and the like.

When even higher thermal conductivity is required, there are used thermally-conductive epoxy resin compositions prepared by mixing special thermally-conductive fillers in epoxy resin and thermally-conductive epoxy resin molded articles formed by the composition. Known as thermally-conductive fillers of this kind are surface-modified aluminum oxide, spherical cristobalite, inorganic fillers having specific particle sizes, etc. Such fillers are described in the following publications: Japanese Examined Patent Publication No. 06-51778, Japanese Laid-Open Patent Publication No. 2001-172472, Japanese Laid-Open Patent Publication No. 2001-348488. Furthermore, Japanese Laid-Open Publication No. 11-323162 discloses an insulating composition having an increased thermal conductivity, which is formed by polymerizing a liquid crystalline epoxy resin having a mesogenic group. This insulating composition has a high thermal conductivity of 0.4 W/(m.k) or more without adding thermally-conductive fillers.

However, recent electronic components generate larger amounts of heat due to improvement in their performance. Therefore, there is a demand for materials having better thermal conductivity than the thermally-conductive epoxy resin molded articles obtained from the above compositions by conventional technology.

The objective of the present invention is to provide a method for producing a thermally-conductive epoxy resin molded article which can exhibit an excellent thermal conductivity.

The invention provides a thermally-conductive epoxy resin molded article characterized by an epoxy resin having molecular chains that contain an azomethine group (-CH=N-). The molded article has a thermal conductivity in the range of 0.5 to 30 W/(m.K) and is in sheet form having a thickness.

The present invention also provides a method for producing a thermally-conductive epoxy resin molded article as mentioned above. The method comprises steps of
preparing the epoxy resin composition containing the epoxy resin and a curing agent, wherein the preparing step includes mixing the epoxy resin and the curing agent, and retaining the mixture of the epoxy resin and the curing agent in a molten state in a cavity of a molding die,
disposing a pair of magnets above and under the molding die and applying a magnetic field by the magnets to the molten epoxy resin composition to orient the molecular chains of the epoxy resin in a specific direction, the specific direction being parallel to the thickness direction of the sheet, and
curing the epoxy resin composition with the molecular chains of the epoxy resin being oriented in the specific direction.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a perspective view of a thermally-conductive sheet produced by the method of the present invention;
Fig. 2 is a schematic view showing a method of producing a thermally-conductive sheet having a higher thermal conductivity in a thickness direction thereof; and
Fig. 3 is a schematic view showing a method of producing a thermally-conductive sheet having a higher thermal conductivity in a direction parallel to the surface thereof.

Herein below, one embodiment of the present invention will be explained in detail.

A thermally-conductive epoxy resin molded article comprises an epoxy resin having molecular chains that contain at least one azomethine group (-CH=N-), as its main ingredient. This thermally-conductive epoxy resin molded article has a thermal conductivity in the range of 0.5 to 30 W/(m.K). Such a thermally-conductive epoxy resin molded article can be obtained by curing an epoxy resin composition containing an epoxy resin having molecular chains that contain at least one azomethine group. This thermally-conductive epoxy resin molded article can conduct and disperse heat generated by electric components out of electric equipment. Therefore, this molded article can be applied to heat-dissipating members or insulating members, such as a printed circuit board, a semiconductor package, a sealing member, a casing, a heat pipe, a radiator plate, a heat diffusing plate, and a thermally-conductive adhesive.

Now the epoxy resin composition will be explained. The epoxy resin composition contains an epoxy resin having molecular chains that contain at least one azomethine group, as a main ingredient. Such epoxy resin can effectively conduct heat in a longitudinal direction of the molecular chains containing azomethine groups. The phrase of "as a main ingredient" means that the epoxy resin composition contains the epoxy resin so that the content of the epoxy resin in a resultant epoxy resin molded article will be 50 weight percent or more, preferably 70 weight percent or more, still preferably 80 weight percent or more. In this way, it is preferable that an epoxy resin molded article contains an epoxy resin in content of 50 weight percent or more so that the heat conduction by the molecular chains having azomethine groups can be sufficiently effective.

Examples of the epoxy resin includes terephthalylidene-bis-(4-amino-3-methylphenol)diglycidylether, terephthalylidene-bis-(p-aminophenol)diglycidylether, 4-azomethin benzole diglycidylether, 4,4'-diazomethine benzole diglycidylether, and 1,5-bis-{4-[2-aza-2-(methyl-4-hydroxy phenyl)-vinyl] phenoxy} pentane diglycidylether.

The epoxy resin preferably has molecular chains that contain a mesogenic group having an azomethine group. The mesogenic groups in the epoxy resin are regularly arranged in a specific temperature range, exhibiting a liquid crystalline state. This can facilitate the molecular chains of the epoxy resin containing the mesogenic groups to be highly oriented. The quantity of mesogenic groups contained in a single molecular chain of the epoxy resin may be one or more. The quantity of azomethine groups in a single mesogenic group may be one or more.

The epoxy resin especially preferably contains at least one selected from the mesogenic groups of the following formulas (1) to (4), wherein the mesogenic groups contain at least one azomethine group: 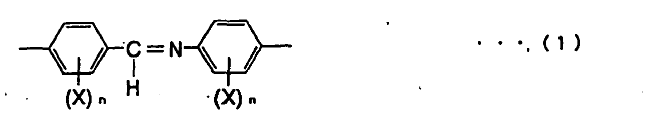 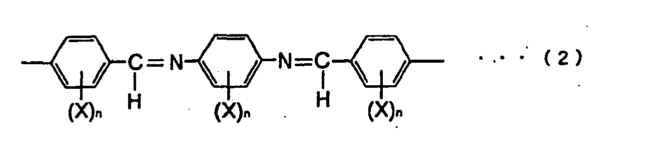 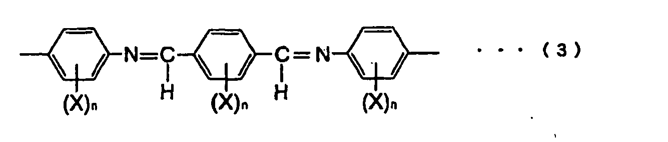 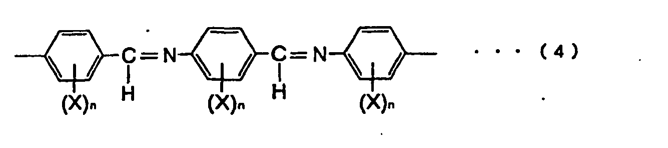 wherein X represents R, F, Cl, Br, I, CN or NO2, n represents any integer of 0 to 4, and R represents aliphatic hydrocarbons.

Introduction of such mesogenic groups of the formulas (1) to (4) into the epoxy resin facilitates the molecular chain thereof to be highly oriented. Thus, the resultant epoxy resin molded article has an excellent thermal conductivity in a specific direction in which the molecular chains of the epoxy resin are oriented.

Examples of epoxy resins that contain at least one selected from the mesogenic groups of the formulas (1) to (4) include terephthalylidene-bis-(4-amino-3-methylphenol)diglycidylether, terephthalylidene-bis-(p-amino phenol)diglycidylether, 4-azomethin benzole diglycidylether, and 1,5-bis-{4-[2-aza-2-(methyl-4-hydroxy phenyl)-vinyl]-phenoxy} pentane diglycidylether.

Examples of liquid crystalline states include nematic, smectic, cholesteric, and discotic liquid crystalline states. Such liquid crystalline states can be confirmed by a polarization inspection method utilizing an orthogonal polarizer. The epoxy resin in the liquid crystalline state exhibits strong birefringence. It is desirable that the epoxy resin exhibits a smectic liquid crystalline state, since such epoxy resin has better thermal conductivity. An epoxy resin that is capable exhibiting the smectic liquid crystalline state can be obtained by introducing mesogenic groups having azomethine groups into the epoxy resin. The phase transition of such mesogenic groups into a liquid crystalline state can be controlled by temperature or content of the mesogenic groups in the composition. However, it is desirable to control the phase transition by temperature.

The epoxy resin may contain other mesogenic groups other than the mesogenic groups having azomethine groups. Examples of other mesogenic groups include biphenyl, cyanobiphenyl, terphenyl, cyanoterphenyl, phenylbenzoate, azobenzene, azoxybenzene, stilbene, phenylcyclohexyl, biphenylcyclohexyl, phenoxyphenyl, benzylidenaniline, benzylbenzoate, phenylpyrimidine, phenyldioxane, benzoylaniline, tolan, and derivatives thereof.

Further, the epoxy resin further includes soft segments called flexible chains (spacers) linking a plurality of the mesogenic groups having azomethine groups, or a mesogenic group having an azomethine group and other mesogenic groups. Examples of the soft segment include an aliphatic hydrocarbon group, an aliphatic ether group, an aliphatic ester group, and a siloxane bond.

Preferably, the epoxy resin composition is mixed with a curing agent for assisting curing of the epoxy resin contained therein. Examples of the curing agent include amine-based curing agents, acid anhydride-based curing agents, phenol-based curing agents, polymercaptan-based curing agents, polyaminoamide-based curing agents, isocyanate-based curing agents, and blockisocyanate-based curing agents. In mixing these curing agents with the epoxy resin composition, the amount of each curing agent to be mixed can be determined by taking into account the type of curing agent to be mixed and the physical properties of a thermally-conductive epoxy resin molded article to be obtained as required. Preferably, with respect to 1 mole of the epoxy group, the ratio amount of a curing agent to be mixed is 0.005 to 5, more preferably 0.01 to 3, most preferably 0.5 to 1.5 of the chemical equivalent. If the ratio amount of the curing agent mixed with one mole of the epoxy group is smaller than 0.005 of the chemical equivalent, the epoxy resin may not cure quickly. On the other hand, if the ratio amount of the mixed curing agent exceeds 5 of the chemical equivalent, an extremely fast curing reaction takes place, which can make it difficult to control the orientation of the epoxy resin. It should be noted that the term "chemical equivalent" in the present specification represents, e.g., when an amine-based curing agent is used as the curing agent, the number of moles of active hydrogen of amines with respect to 1 mole of the epoxy group.

Examples of the amine-based curing agents include aliphatic amines, polyether polyamines, alicyclic amines, and aromatic amines. Examples of aliphatic amine include ethylenediamine, 1,3-diaminopropane, 1,4-diaminopropane, hexamethylenediamine, 2,5-dimethylhexamethylenediamine, trimethylhexamethylenediamine, diethylenetriamine, iminobispropylamine, bis(hexamethylene)triamine, triethylenetetramine, tetraethylenepentamine, pentaethylenehexamine, N-hydroxyethylethylenediamine, and tetra(hydroxyethyl)ethylenediamine. Examples of polyetherpolyamine include triethyleneglycoldiamine, tetraethyleneglycoldiamine, diethyleneglycolbis(propylamine), polyoxypropylenediamine, and polyoxypropylenetriamine. Examples of alicyclic amine include isophoronediamine, menthanediamine, N-aminoethylpiperazine, bis(4-amino-3-methyldicyclohexyl)methane, bis(aminomethyl)cyclohexane, 3,9-bis(3-aminopropyl)2,4,8,10-tetraoxaspiro(5,5)undecane, and norbornenediamine. Examples of aromatic amine include tetrachloro-p-xylenediamine, m-xylenediamine, p-xylenediamine, m-phenylenediamine, o-phenylenediamine, p-phenylenediamine, 2,4-diaminoanisole, 2,4-toluenediamine, 2,4-diaminodiphenylmethane, 4,4'-diaminodiphenylmethane, 4,4'-diamino-1,2-diphenylethane, '2,4-diaminodiphenylsulfone, 4,4'-diaminodiphenylsulfone, m-aminophenol, m-aminobenzylamine, benzyldimethylamine, 2-dimethylaminomethylphenol, triethanolamine, methylbenzylamine, alpha -(m-aminophenyl)ethylamine, alpha -(p-aminophenyl)ethylamine, diaminodiethyldimethyldiphenylmethane, and alpha , alpha '-bis(4-aminophenyl)-p-diisopropylbenzene.

Examples of acid anhydride curing agent include dodecenyl succinic anhydride, polyadipic anhydride, polyazelaic anhydride, polysebacic anhydride, poly(ethyloctadecanedioic) anhydride, poly(phenylhexadecanedioic)anhydride, methyltetrahydro phthalic anhydride, methylhexahydro phthalic anhydride, hexahydro phthalic anhydride, methylhymic anhydride, tetrahydro phthalic anhydride, trialkyltetrahydro phthalic anhydride, methylcyclohexenedicarboxylic anhydride, methylcyclohexenetetracarboxylic anhydride, phthalic anhydride, trimellitic anhydride, pyromellitic anhydride, benzophenonetetra carboxylic anhydride, ethylene grycolbistrimellitate, chlorendic anhydride, nadic anhydride, methylnadic anhydride, 5-(2,5-dioxotetrahydro-3-furanyl)-3-methyl-3-cyclohexane-1,2-dicarboxylic anhydride, 3,4-dicarboxy-1,2,3,4-tetrahydro-1-naphthalene succinic acid dianhydride, and 1-methyl-dicarboxy-1,2,3,4-tetrahydro-1-naphthalene succinic acid dianhydride.

Examples of phenol curing agent include bisphenol A, bisphenol F, phenol novalak, bisphenol A novalak, o-cresol novalak, m-cresol novalak, p-cresol novalak, xylenol novalak, poly-p-hydroxystyrene, resorcin, catechol, t-butylcatechol, t-butylhydrochinone, fluoroglycinol, pyrogallol, t-butylpyrogallol, allylated pyrogallol, polyallylated pyrogallol, 1,2,4-benzenetriol, 2,3,4-trihydroxybenzophenone, 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,4-dihydroxynaphthalene, 2,5-dihydroxynaphthalene, 2,6-dihydroxynaohthalene, 2,7-dihydroxynaphthalene, 2,8-dihydroxynaphthalene, allylated compounds or polyallylated compounds of the above dihydroxynaphthalene, allylated bisphenol A, allylated bisphenol F, allylated phenol novalak, and allylated pyrogallol.

The above curing agents may be mixed alone or in combination into the epoxy resin composition. The curing agents may be of a type that cures the epoxy resin immediately after mixing therewith. Alternatively, it may be a latent type curing agent that is premixed with an epoxy resin for preservation so as to cure the epoxy resin later, e.g., by heating the mixture. Examples of the latent type curing agent include dicyandiamide, guanidine compounds, nitrogen-containing compounds, such as adipic acid dihydrazide, sebacic acid dihydrazide, and isophthalic acid dihydrazide, amineimides, tertiary amine salts, imidazole salts, Lewis acids and salts thereof, and Bronsted acid salts.

It is also possible to cure the epoxy resin contained in the epoxy resin composition by carrying out cationic polymerization, using compounds, such as aluminum chloride (AlCl3), tin tetrachloride (SnCl₄), titanium tetrachloride (TiCl4), boron trifluoride (BF₃), phosphorus pentachloride (PCl5), and antimony pentafluoride (SbF5). Further, it is also possible to cure the epoxy resin contained in the epoxy resin composition by carrying out anionic polymerization using ammonium salts, such as tetrabutylammonium bromide, and dimethyldibenzylammonium chloride.

A suitable amount of thermally-conductive filler can be mixed into the epoxy resin composition in order to improve the thermal conductivity of the thermally-conductive epoxy resin molded article. Examples of thermally-conductive filler include metals, metal oxides, metal nitrides, metal carbides, metal hydroxides, metal-coated resins, carbon fibers, graphitized carbon fibers, natural graphite, synthetic graphite, spherical graphite particles, mesocarbon microbeads, whisker carbon, microcoiled carbon, nanocoiled carbon, carbon nanotube, and carbon nanohorn. Examples of metals include silver, copper, gold, platinum, and zircon; examples of metal oxides include aluminum oxide and magnesium oxide; examples of metal nitrides include boron nitride, aluminum nitride, and silicon nitride; examples of metal carbides include silicon carbide; and examples of metal hydroxides include aluminum hydroxide and magnesium hydroxide. These thermally-conductive fillers may be mixed alone or in combination. Further, so as to improve wettability and to enhance the interface between the epoxy resin and a thermally-conductive filler, and to enhance dispersibility thereof, the surface of the thermally-conductive filler may be treated with a coupling agent.

A large amount of thermally-conductive filler may be mixed with the epoxy resin composition in order to enhance the thermal conductivity of the thermally-conductive epoxy resin molded article to be obtained. More specifically, thermally-conductive filler may be mixed in an amount equal to or larger than 100 parts by weight, and smaller than 1000 parts by weight, with respect to 100 parts by weight of the epoxy resin. However, the amount of the thermally-conductive filler to be mixed with the epoxy resin composition is preferably smaller than 100 parts by weight, more preferably smaller than 80 parts by weight, further preferably smaller than 70 parts by weight with respect to 100 parts by weight of the epoxy resin. When the epoxy resin molded article requires further reduction in weight, it is preferable that the epoxy resin composition contains substantially no thermally-conductive filler, namely, filler in an amount equal to or smaller than 5 parts by weight, more preferably in an amount equal to or smaller than 1 part by weight, with respect to 100 parts by weight of the epoxy resin. It is further preferable that the composition contains no thermally-conductive fillers.

Furthermore, the epoxy resin composition may contain small amounts of additives, such as a pigment, a dye, a fluorescent brightening agent, a dispersant, a stabilizer, a UV absorbent, an energy quencher, an antistatic additive, an antioxidant, a fire retardant, a heat stabilizer, a slip additive, a plasticizer, a solvent, if necessary.

Next, the thermally-conductive epoxy resin molded article will be described in detail.

The thermally-conductive epoxy resin molded article of the present invention can be obtained by molding the epoxy resin composition into a desired shape and curing it. In the thermally-conductive epoxy resin, the molecular chains containing azomethine groups are oriented in the specific direction, and in that specific direction, the molded article has a significantly increased thermal conductivity. The thermal conductivity of the thermally-conductive epoxy resin molded article is 0.5 to 30 W/(m.K), preferably 0.53 to 0.89 W/(m.K) in the molecular-chain-oriented direction. When the thermal conductivity is smaller than 0.5 W/(m.K), effective transfer of heat generated from the electronic parts to the outside may be difficult. On the other hand, it is difficult to obtain a thermally-conductive epoxy resin molded article having a thermal conductivity more than 30 W/(m.K), taking into consideration the physical properties of the epoxy resin.
The thermally-conductive epoxy resin molded article having the above range of thermal conductivity can be especially readily achieved by introducing at least one selected from the mesogenic groups of the formulas (1) to (4) into molecular chains of the epoxy resin and orienting these molecular chains in a specific direction.

To produce the thermally-conductive epoxy resin molded article from the epoxy resin composition, the epoxy resin composition is molded by a molding apparatus and the molecular chains of the epoxy resin are oriented in a specific direction by any orientation technique. The orientation of the epoxy resin may be performed before or during the epoxy resin composition is cured. However, it is desirable that the orientation of the epoxy resin be performed during curing, since curing and orientation can be done simultaneously to facilitate the production of the thermally-conductive epoxy resin molded article.

The method utilizing a magnetic field is preferred, because it can readily vary the direction and degree of the orientation of the epoxy resin to control the thermal conductivity of the epoxy resin molded article to be obtained. In the method utilizing a magnetic field, the epoxy resin composition is applied with a magnetic field, whereby molecular chains of the epoxy resin are oriented in a direction substantially parallel with or perpendicular to the lines of magnetic force. Then, the epoxy resin composition is cured in the state where the orientation of the epoxy resin is maintained.

The magnetic field-generating device for generating the magnetic field includes a permanent magnet, an electromagnet, a super-conducting magnet, and a coil, for example. Among them, the super-conducting magnet is preferable since it is capable of generating a magnetic field having a practical magnetic flux density.

The magnetic flux density of the magnetic field applied to the epoxy resin composition is preferably 0.5 to 20 Tesla (T), more preferably 1 to 20 T, most preferably 2 to 10 T. If the magnetic flux density is smaller than 0.5 T, the molecular chains of the epoxy resin may not be sufficiently oriented. This can make it difficult to control thermal conductivity of the epoxy resin molded article to be obtained, in a desired range. On the other hand, it is difficult in practice to produce a magnetic field having a magnetic flux density larger than 20 T. A magnetic flux density in the range of 2 to 10 T is practical and effective to orient the molecular chains of the epoxy resin to impart high thermal conductivity in a thermally-conductive epoxy resin molded article.

As the molding apparatus for molding the epoxy resin, there can be used, for example, a transfer molding, a press molding, a cast molding, an injection molding, and an extrusion molding apparatuses. Further, the thermally-conductive epoxy resin molded article can be formed into various shapes, such as sheet-like.

Methods of curing the epoxy resin contained in the epoxy resin composition include ones utilizing self-polymerization of epoxy groups contained in the epoxy resin, and reaction between the above epoxy resin and the above curing agent. Such reactions include thermal curing, light curing, radiation curing, and moisture curing reactions.

When the thermally-conductive epoxy resin molded article according to the present embodiment is molded into sheet form, the sheet preferably has a thickness of between 0.02 and 10 mm, more preferably between 0.1 and 7 mm, most preferably between 0.2 and 5 mm. When the thickness of the sheet is less than 0.02 mm, handling of the sheet may be burdensome when it is applied to an object. On the other hand, when the thickness of the sheet exceeds 10 mm, the thermal conductivity of such sheet may decrease.

Next, a method for producing a thermally-conductive epoxy resin molded article from an epoxy resin composition according to one embodiment will be described in detail with reference to Figs. 1 to 3. In this embodiment, the thermally-conductive epoxy resin molded article is embodied as the thermally-conductive epoxy resin sheet 11 shown in Fig. 1.

Firstly, an explanation is made on as to the case where the molecular chains containing azomethine groups of the epoxy resin are oriented in the thickness direction of the thermally-conductive sheet 11 (the Z axis direction in Fig. 1). As shown in Fig. 2, a cavity 13a having a shape corresponding to the sheet 11 is formed in a molding die 12a. A pair of permanent magnets 14a are disposed as a magnetic field generating apparatus above and under the molding die 12a. Thus, the direction of the magnetic lines of force M1 of the magnetic field generated by the permanent magnets 14a is parallel to the thickness direction of the cavity 13a.

First, the cavity 13a is filled with an epoxy resin composition 15. The molding die 12a has a heating apparatus (not shown) to keep the epoxy resin contained in the epoxy resin composition 15 in the cavity 13a in a molten state. If the epoxy resin composition 15 contains an epoxy resin containing mesogenic groups, the epoxy resin is kept in a liquid crystalline state, for example, by maintaining it at a temperature in which the epoxy resin can exhibit the liquid crystalline state. Then, a magnetic field with predetermined magnetic flux density is applied to the composition 15 in the cavity 13a by the permanent magnets 14a. The magnetic field may be applied to the cavity 13a before it is filled with the epoxy resin composition. In this instance, the direction of the magnetic lines of force M1 is parallel to the thickness direction of the epoxy resin composition 15 in sheet form, so that the molecular chains containing azomethine groups of the epoxy resin can be oriented in the thickness direction of the epoxy resin composition 15. While maintaining this orientation, the epoxy resin composition 15 is solidified by a curing reaction. The magnetic field may still be applied to the epoxy resin composition 15 to maintain the orientation of the molecular chains during curing. After curing, the product is removed from the molding die 12a to provide a thermally-conductive epoxy resin sheet 11 in which the molecular chains of the epoxy resin are oriented in the thickness direction. This sheet 11 can have a thermal conductivity in the range of 0.5 to 30 W/(m.K) in the thickness direction thereof.

Accordingly, the thermally-conductive epoxy resin sheet 11 can be used in, for example, a circuit board material and a radiation sheet for use in a semiconductor package, which requires excellent thermal conductivity in the thickness direction.

Next, a method for producing a thermally-conductive epoxy resin molded article is described. The molecular chains of the epoxy resin are oriented in the direction substantially parallel to the surface of the thermally-conductive epoxy resin sheet 11 (i.e., the X axis and/or the Y axis direction in Fig. 1). As shown in Fig. 3, a pair of permanent magnets 14b are disposed on both lateral sides of a molding die 12b so that the magnetic lines of force M2 pass in the direction parallel to the bottom surface of a cavity 13b of the molding die 12b. The cavity 13b has a form corresponding to the sheet 11 to be formed. A magnetic field is applied by means of the permanent magnets 14b to an epoxy resin composition 15 in the cavity 13b. In this instance, the direction of the magnetic lines of force M2 is parallel to the surface of the epoxy resin composition 15 in sheet form, so that the molecular chains containing azomethine groups of the epoxy resin can be oriented in the direction parallel to the surface of the epoxy resin composition 15. While maintaining this orientation, the epoxy resin composition 15 is solidified by a curing reaction, and then removed from the molding die 12b. This results in a thermally-conductive epoxy resin sheet 11 in which the molecular chains of the epoxy resin are oriented in the direction substantially parallel to the surface of the sheet and which has a thermal conductivity of 0.5 to 30 W/(m.K) in the above direction.

Effects and advantages provided by the present embodiment will be described in the following paragraphs:
- A thermally-conductive epoxy resin molded article according to the present embodiment is formed from an epoxy resin composition containing an epoxy resin having molecular chains that contains an azomethine group. The thermally-conductive epoxy resin molded article has a thermal conductivity in the range of 0.5 to 30 W/(m.K). In this configuration, the thermally-conductive epoxy resin molded article exhibits an excellent thermal conductivity due to molecular chains of the epoxy resin having mesogenic groups. When a thermally-conductive filler is incorporated into such thermally-conductive epoxy resin molded article, the amount of the filler to be mixed will be reduced since the above epoxy resin itself has good thermal conductivity. This allows the resultant thermally-conductive epoxy resin molded article to be lighter.
- In a thermally-conductive epoxy resin molded article according to the present embodiment, the molecular chains containing azomethine groups of the epoxy resin are oriented in a direction so that the molded article has a thermal conductivity in the range of 0.5 to 30 W/(m.K) in that particular direction. Accordingly, the thermally-conductive epoxy resin molded article exhibits an excellent thermal conductivity in that particular direction.
- In the thermally-conductive epoxy resin molded article according to the present embodiment, the epoxy resin has molecular chains that preferably contain at least one selected from the mesogenic groups of the formulas (1) to (4). In this case, the above mesogenic group can impart a stable liquid crystalline state to the epoxy resin, since it has an azomethine group and a benzene ring that are rigid. Therefore, the molecular chains containing such mesogenic groups can be highly oriented in a specific direction by utilizing the liquid crystallinity of the mesogenic groups. This allows an epoxy resin molded article to have an excellent thermal conductivity in this specific direction. In this way, by utilizing the liquid crystallinity of the mesogenic groups, a thermally-conductive epoxy resin molded article with excellent thermal conductivity can be readily obtained.
- Preferably, the thermally-conductive epoxy resin molded article produced by the method of the present invention has sheet form and a thermal conductivity of 0.5 to 30 W/(m.K) in the thickness direction. The thermally-conductive epoxy resin molded article in sheet form can be applied in applications, such as circuit board materials and heat-radiation sheets, which have a sheet-like shape and are required to have higher thermal conductivity in the thickness direction thereof.
- In the method of producing the thermally-conductive epoxy resin molded article according to the present embodiment, a magnetic field is applied to the epoxy resin composition in a fixed direction and then the epoxy resin in the composition is cured. According to this production method, the molecular chains containing azomethine groups of the epoxy resin can be readily oriented in a specific direction, so that the thermally-conductive epoxy resin molded article can be obtained easily with an excellent thermal conductivity in this specific direction.
   It should be apparent to those skilled in the art that the present invention can be embodied in many other specific forms without departing from the spirit or scope of the invention. Particularly, it should be understood that the invention may be embodied in the following forms.
- The epoxy resin composition may be mixed with reinforcing materials other than the thermally-conductive fillers. Examples of the reinforcing materials include reinforced fibers that are enhanced in thermal resistance and mechanical strength, such as aramid, silicon carbide, alumina, boron, tungsten carbide, and glass fibers,
- A pair of permanent magnets 14a/14b is disposed so that a molding die 12a/12b is placed between them, but one of the paired permanent magnets may be omitted.
- A pair of south pole magnets or a pair of north pole magnets may be disposed so that the pair are opposed to each other.
- The magnetic lines of force M1/M2 may be straight. However, they may be curved or in other shapes. In addition, either of the magnetic lines of force M1/M2 or the cavity 13a/13b may be rotated relative to the other.

Next, the above-described embodiment will be described in more detail based on examples and comparative examples.

### (Example 1)

Terephthalylidene-bis-(4-amino-3-methylphenol) diglycidylether (hereinafter referred to as the "epoxy resin A"), as an epoxy resin that contains the mesogenic group having azomethine groups and represented by the formula (3), and 4,4'-diamino-1,2-diphenylethane as a curing agent were mixed with each other at a molar ratio of 1 : 0.5 to prepare an epoxy resin composition 15. This epoxy resin composition 15 was retained in a molten state in a cavity 13a of a molding die 12a heated to 170°C for shaping into sheet form, as shown Fig. 2. Then, the epoxy resin composition 15 in the cavity 13a was cured at 170°C for 10 minutes under a magnetic field with a magnetic flux density of 1 Tesla, whereby a thermally-conductive epoxy resin sheet 11 having a thickness of 2 mm was obtained. It should be noted that the magnetic lines of force M1 were parallel to the thickness direction of the epoxy resin composition 15 in sheet form.

### (Example 2 and 3)

The same epoxy resin composition 15 as used in Example 1 was used, and each thermally-conductive sheet was prepared by following the same procedure as in Example 1 except that the magnetic flux density was changed to the values as shown in Table 1 for each example.

### (Example 4)

Terephthalylidene-bis-(p-aminophenol) diglycidylether (hereinafter referred to as the "epoxy resin B"), as an epoxy resin that contains the mesogenic group having azomethine groups and represented by the formula (3), and 4,4'-diamino-1,2-diphenylethane as a curing agent were mixed with each other at a molar ratio of 1 : 0.5 to prepare an epoxy resin composition 15. This epoxy resin composition 15 was retained in a molten state in a cavity 13a of a molding die 12a heated to 190°C for shaping into sheet form, as shown in Fig. 2. Then, the epoxy resin composition 15 in the cavity 13a was cured at 190°C for 1 hour under a magnetic field with a magnetic flux density of 10 Tesla, whereby a thermally-conductive epoxy resin sheet 11 having a thickness of 2 mm was obtained. It should be noted that the direction of magnetic lines of force M1 of the magnetic field was parallel to the thickness direction of the epoxy resin composition 15 in sheet form.

### (Example 5)

4-azomethin benzole diglycidylether (hereinafter referred to as the "epoxy resin C"), as an epoxy resin that contains the mesogenic group having azomethine groups and represented by the formula (1), and 4,4'-diamino-1,2-diphenylethane as a curing agent were mixed with each other at a molar ratio of 1 : 0.5 to prepare an epoxy resin composition 15. This epoxy resin composition 15 was retained in a molten state in a cavity 13a of a molding die 12a heated to 150°C for shaping into sheet form, as shown in Fig. 2. Then, the epoxy resin composition 15 in the cavity 13a was cured at 125°C for 4 hours under a magnetic field having a magnetic flux density of 10 Tesla, whereby a thermally-conductive epoxy resin sheet 11 having a thickness of 2 mm was obtained. It should be noted that the magnetic lines of force M1 were directed along with the thickness direction of the epoxy resin composition 15 in sheet form.

### (Example 6)

4,4'-diazomethine benzole diglycidylether (hereinafter referred to as the "epoxy resin D"), as an epoxy resin that contains the mesogenic group having azomethine groups and represented by the formula (2), and 4,4'-diamino-1,2-diphenylethane as a curing agent were mixed with each other at a molar ratio of 1 : 0.5 to prepare an epoxy resin composition 15. This epoxy resin composition 15 was retained in a molten state in a cavity 13a of a molding die 12a heated to 230°C for shaping into sheet form, as shown in Fig. 2. Then, the epoxy resin composition 15 in the cavity 13a was cured at 230°C for 5 minutes while being subjected to a magnetic field having a magnetic flux density of 10 Tesla, whereby a thermally-conductive epoxy resin sheet 11 having a thickness of 2 mm was obtained. It should be noted that the magnetic lines of force M1 were parallel to the thickness direction of the epoxy resin composition 15 in sheet form.

### (Example 7)

1,5-bis-{4-[2-aza-2-(methyl-4-hydroxyphenyl)-vinyl] phenoxy} pentane diglycidylether (hereinafter referred to as the "epoxy resin E"), as an epoxy resin that contains the mesogenic group having azomethine groups and represented by the formula (1), and 4,4'-diamino-1,2-diphenylethane as a curing agent were mixed with each other at a molar ratio of 1 : 0.5 to prepare an epoxy resin composition 15. This epoxy resin composition 15 was retained in a molten state in a cavity 13a of a molding die 12a heated to 150°C for shaping into sheet form, as shown in Fig. 2. Then, the epoxy resin composition 15 in the cavity 13a was cured at 105°C for 2 hours under a magnetic field with a magnetic flux density of 10 Tesla, whereby a thermally-conductive epoxy resin sheet 11 having a thickness of 2 mm was obtained. It should be noted that the magnetic lines of force M1 were directed along with the thickness direction of the epoxy resin composition 15 in sheet form.

### (Comparative Example 1)

Bisphenol A glycidyl ether (hereinafter referred to as the "epoxy resin F"), as an epoxy resin, and 4,4'-diamino-1,2-diphenylethane as a curing agent were mixed with each other at a molar ratio of 1 : 0.5 to prepare an epoxy resin composition 15. This epoxy resin composition 15 was retained in a molten state in a cavity 13a of a molding die 12a heated to 150°C for shaping into sheet form, as shown in Fig. 2. Then, the epoxy resin composition 15 in the cavity 13a was cured at 80°C for 2 hours without exposure to a magnetic field, whereby a thermally-conductive epoxy resin sheet 11 having a thickness of 2 mm was obtained.

### (Comparative Example 2)

4,4'-biphenol diglycidylether (hereinafter referred to as the "epoxy resin G"), as an epoxy resin, and 4,4'-diamino-1,2-diphenylethane as a curing agent were mixed with each other at a molar ratio of 1 : 0.5 to prepare an epoxy resin composition 15. This epoxy resin composition 15 was retained in a molten state in a cavity 13a of a molding die 12a heated to 150° C for shaping into sheet form, as shown in Fig. 2. Then, the epoxy resin composition 15 in the cavity 13a was cured at 150°C for 1 hour without exposure to a magnetic field, whereby a thermally-conductive epoxy resin sheet 11 having a thickness of 2 mm was obtained.

The thermal conductivity of the thermally-conductive epoxy resin sheets 11 obtained in Examples 1 to 7, and Comparative Examples 1 and 2, in the directions of thickness thereof were measured by a laser flash method. The measurements of the thermal conductivity for the epoxy resin sheets 11 are shown in Table 1.

**Table 1**

| | Examples | | | | | | | Comparative Examples | |
|---|---|---|---|---|---|---|---|---|---|
| | 1 | 2 | 3 | 4 | 5 | 6 | 7 | 1 | 2 |
| Epoxy resin | A | A | A | B | C | D | E | F | G |
| Magnetic flux density (T) | 1 | 5 | 10 | 10 | 10 | 10 | 10 | 0 | 0 |
| Thermal conductivity W/(m.K) | 0.76 | 0.80 | 0.89 | 0.78 | 0.64 | 0.57 | 0.53 | 0.19 | 0.24 |

The measurements in Table 1 clearly shows that the thermally-conductive epoxy resin sheets 11 obtained in Examples 1 to 7 have a higher thermal conductivity in the thickness direction thereof that is equal to or greater than 0.5 W/(m.K). Accordingly, these sheets can conduct heat effectively.

On the other hand, the thermally-conductive epoxy resin sheets 11 obtained in Comparative Examples 1 and 2 have a low thermal conductivity that is less than 0.5 W/(m.K), causing insufficient heat conducting ability.

The present examples and embodiments are to be considered as illustrative and not restrictive and the invention is not to be limited to the details given herein, but may be modified within the scope and equivalence of the appended claims.

## Claims

1. A method for producing a thermally-conductive epoxy resin molded article (11) formed from an epoxy resin composition (15) comprising an epoxy resin, wherein the epoxy resin has molecular chains that contain an azomethine group (-CH=N-), wherein the molded article (11) has a thermal conductivity in a range of 0.5 to 30 W/(m·K), and wherein the molded article (11) is in sheet form having a thickness, the method **characterized by** steps of:
preparing the epoxy resin composition (15) containing the epoxy resin and a curing agent, wherein the preparing step includes mixing the epoxy resin and the curing agent, and retaining the mixture of the epoxy resin and the curing agent in a molten state in a cavity of a molding die,
disposing a pair of magnets above and under the molding die and applying a magnetic field by the magnets to the molten epoxy resin composition (15) to orient the molecular chains of the epoxy resin in a specific direction, the specific direction being parallel to the thickness direction of the sheet, and
curing the epoxy resin composition (15) with the molecular chains of the epoxy resin being oriented in the specific direction.

2. The method according to claim 7, **characterized in that** the molecular chains of the epoxy resin contain a mesogenic group that contains an azomethine group, and the method further comprises a step of:
placing the mesogenic group of the epoxy resin in a liquid crystalline state.

3. The method according to claim 1 or 2, **characterized in that** the molded article (11) has a thermal conductivity in a range of 0.53 to 0.89 W/(m·K).

4. A thermally-conductive epoxy resin molded article (11) produced by the method according to any one of claims 1 to 3.

5. The thermally-conductive epoxy resin molded article (11) according to claim 4, **characterized in that** the molecular chains of the epoxy resin contain at least one selected from mesogenic groups represented by formulas (1) to (4), wherein the mesogenic groups contain azomethine groups; 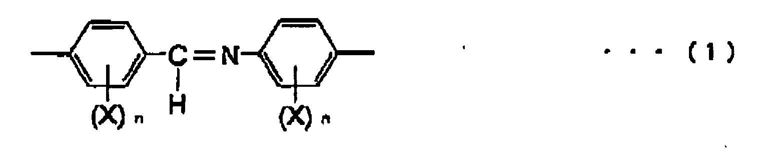 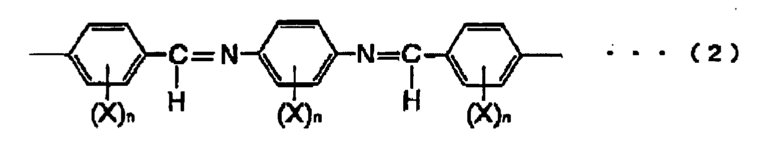 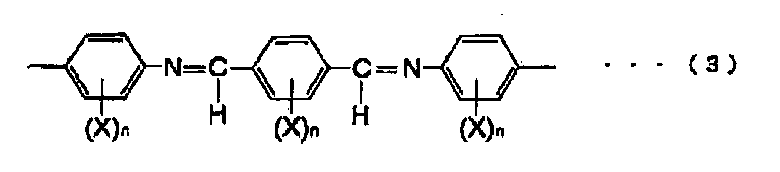 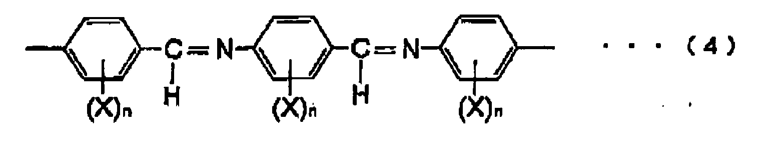 wherein X represents R, F, Cl, Br, I, CN or NO₂; n represents any integer of 0 to 4, and R represents aliphatic hydrocarbons.

## Patentansprüche

1. Verfahren zur Herstellung eines wärmeleitfähigen Epoxidharzformkörpers (11) aus einer Epoxidharzzusammensetzung (15), die ein Epoxidharz umfaßt, wobei das Epoxidharz Molekülketten aufweist, die eine Azomethingruppe (-CH=N-) enthalten, wobei der Formkörper (11) eine Wärmeleitfähigkeit im Bereich von 0,5 bis 30 W/(m·K) aufweist und der Formkörper (11) in Folienform mit einer Dicke vorliegt, **dadurch gekennzeichnet, daß** man:
die Epoxidharzzusammensetzung (15), die das Epoxidharz und einen Härter enthält, herstellt, wobei man das Epoxidharz und den Härter mischt und
die Mischung aus dem Epoxidharz und dem Härter im Hohlraum eines Formwerkzeugs in schmelzflüssigem Zustand hält,
ober- und unterhalb des Formwerkzeugs zwei Magneten anordnet und durch die Magneten ein magnetisches Feld an die schmelzflüssige Epoxidharzzusammensetzung (15) anlegt, um die Molekülketten des Epoxidharzes in einer spezifischen Richtung zu orientieren, wobei die spezifische Richtung zur Dickenrichtung der Folie parallel ist, und
die Epoxidharzzusammensetzung (15) härtet, wobei die Molekülketten des Epoxidharzes in der spezifischen Richtung orientiert sind.

2. Verfahren nach Anspruch 1, **dadurch gekennzeichnet, daß** die Molekülketten des Epoxidharzes eine mesogene Gruppe, die eine Azomethingruppe enthält, enthalten, und bei dem man ferner:
die mesogene Gruppe des Epoxidharzes in einen flüssigkristallinen Zustand bringt.

3. Verfahren nach Anspruch 1 oder 2, **dadurch gekennzeichnet, daß** der Formkörper (11) eine Wärmeleitfähigkeit im Bereich von 0,53 bis 0,89 W/(m·K) aufweist.

4. Wärmeleitfähiger Epoxidharzformkörper (11), hergestellt nach dem Verfahren nach einem der Ansprüche 1 bis 3.

5. Wärmeleitfähiger Epoxidharzformkörper (11) nach Anspruch 4, **dadurch gekennzeichnet, daß** die Molekülketten des Epoxidharzes mindestens eine der mesogenen Gruppen der Formeln (1) bis (4) enthalten, wobei die mesogenen Gruppen Azomethingruppen enthalten: 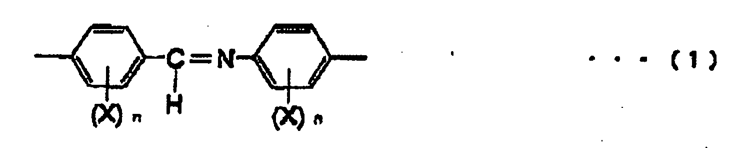 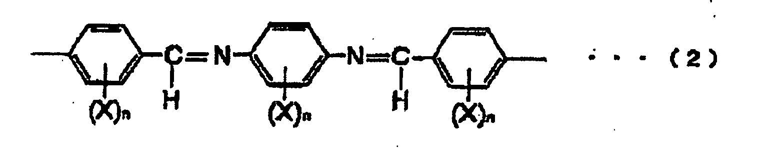 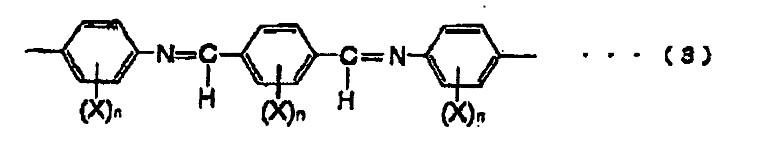 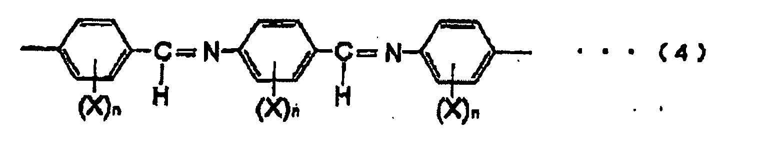 worin X für R, F, Cl, Br, I, CN oder NO₂ steht; n für eine ganze Zahl von 0 bis 4 steht und R für aliphatische Kohlenwasserstoffe steht.

## Revendications

1. Procédé de fabrication d'un article moulé (11) en résine époxy thermoconductrice formé à partir d'une composition de résine époxy (15) comprenant une résine époxy, dans lequel la résine époxy comporte des chaînes moléculaires qui contiennent un groupe azométhine (-CH=N-), dans lequel l'article moulé (11) a une conductivité thermique comprise dans une gamme de 0,5 à 30 W/(m.K), et dans lequel l'article moulé (11) se présente comme une feuille ayant une certaine épaisseur, le procédé étant **caractérisé par** les étapes consistant à :
préparer la composition de résine époxy (15) contenant la résine époxy et un durcisseur, l'étape de préparation comprenant le mélange de la résine époxy et du durcisseur, et le maintien du mélange de la résine époxy et du durcisseur dans un état fondu dans une cavité d'une matrice de moulage,
disposer une paire d'aimants au-dessus et en dessous de la matrice de moulage et appliquer un champ magnétique avec les aimants à la composition de résine époxy (15) fondue pour orienter les chaînes moléculaires de la résine époxy dans une direction spécifique, la direction spécifique étant parallèle à la direction de l'épaisseur de la feuille, et
durcir la composition de résine époxy (15) avec les chaînes moléculaires de la résine époxy orientées dans la direction spécifique.

2. Procédé selon la revendication 1, **caractérisé en ce que** les chaînes moléculaires de la résine époxy contiennent un groupe mésogène qui contient un groupe azométhine, le procédé comprenant en outre une étape consistant à :
mettre le groupe mésogène de la résine époxy dans un état cristallin liquide.

3. Procédé selon la revendication 1 ou 2, **caractérisé en ce que** l'article moulé (11) a une conductivité thermique comprise dans une gamme de 0,53 à 0,89 W/(m.K).

4. Article moulé (11) en résine époxy thermoconductrice fabriqué par le procédé selon l'une quelconque des revendications 1 à 3.

5. Article moulé (11) en résine époxy thermoconductrice selon la revendication 4, **caractérisé en ce que** les chaînes moléculaires de la résine époxy contiennent au moins un groupe choisi parmi les groupes mésogènes représentés par les formules (1) à (4), les groupes mésogènes contenant des groupes azométhine : 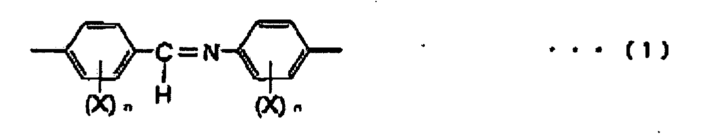 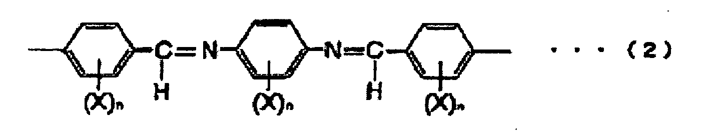 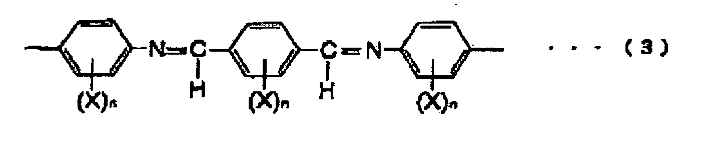 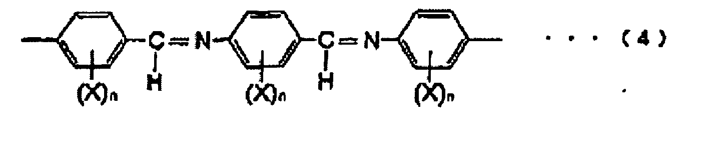 formules dans lesquelles X représente R, F, Cl, Br, I, CN ou NO₂ ; n représente tout entier valant de 0 à 4 ; et R représente des hydrocarbures aliphatiques.
